Europäisches Patentamt

European Patent Office

Office européen des brevets

(11) Publication number : **0 512 752 A1**

# (12) EUROPEAN PATENT APPLICATION

(21) Application number : **92303911.9**

(22) Date of filing : **30.04.92**

(51) Int. Cl.⁵ : **E02D 31/00, B09B 1/00**

(30) Priority : **02.05.91 GB 9109493**
**27.02.92 GB 9204235**

(43) Date of publication of application :
**11.11.92 Bulletin 92/46**

(84) Designated Contracting States :
**BE DE ES FR IT NL**

(71) Applicant : **Mercer, Frank Brian**
**Kenolbri, Meins Road**
**Blackburn, Lancashire BB2 6QF (GB)**

(71) Applicant : **Orr, Brian**
**205 Hoghton Lane**
**Preston, Lancashire PR5 0JE (GB)**

(72) Inventor : **Mercer, Frank Brian**
**Kenolbri, Meins Road**
**Blackburn, Lancashire BB2 6QF (GB)**
Inventor : **Orr, Brian**
**205 Hoghton Lane**
**Preston, Lancashire PR5 0JE (GB)**

(74) Representative : **Lyndon-Stanford, Edward**
**Willoughby Brooke et al**
**MARKS & CLERK 57/60 Lincoln's Inn Fields**
**London WC2A 3LS (GB)**

(54) **Multi-layer lining system and components therefor.**

(57) In order to increase coefficients of friction and thereby enable steeper slopes and increased capacity to be provided in a waste containment landfill enclosure 1 with a side wall and base lining system 2 and a cover lining system 3, the lining systems have a geomembrane 4, 6, 16 in contact with a geonet 5, 7, 17 and a geonet 7, 17 in contact with a geotextile 8, 18. The geomembranes 4, 6, 16 and the geonets 5, 7, 17 have some of their contacting surfaces firmly retaining projecting particles of grit which have been engaged in the plastics material when the respective surface of the plastics material has been softened or melted. In order to further increase the steepness of the slopes, gritted geogrids 9, 19 are laid over the lining systems 2, 3 and secured in position.

FIG.1

EP 0 512 752 A1

Jouve, 18, rue Saint-Denis, 75001 PARIS

## Background of the Invention

This invention relates to multi-layer lining systems for pits or enclosures formed in or above the ground and for cover systems primarily for such enclosures or other geoengineering structures. The enclosure may be a waste containment landfill enclosure, an alternative term for which is waste management pit.

Modern practice in forming a waste containment landfill enclosure is as follows. Side walls and base (forming a cell) are provided with a multi-layer lining system (sometimes called a veneer) comprising for example a flexible, impermeable membrane (geomembrane) to act as a base liner, a drainage net (geonet) which functions as a drainage core to provide a leak detection layer, an inner geomembrane or main liner, a geonet which functions as a drainage core to provide a leachate collection layer, and a fabric (geotextile) which functions as a filter layer. A cover layer of suitable soil, typically about 300mm thick, is provided to prevent puncture of the underlying geotextile etc. Soil cover layers may be reinforced by the inclusion of geogrids. The leachate is the contaminated liquid from the landfill plus ambient moisture, and drains into at least one sump at the bottom of the enclosure. The liquid in the leak detection layer drains into at least one separate sump. The lining system prevents contamination of ground water.

A cover system or cap is provided having a multi-layer lining system comprising for example a geotextile filter layer, a geonet for gas collection, a geomembrane, a geonet which functions as a drainage core for rain or melted snow, and a geotextile. A cover layer of soil, typically about 600 to 750 mm thick, is provided to promote surface water run off and vegetative growth which serves as erosion control. The cover system prevents rain or melted snow running into the waste, can act as a gas collection system, and landscapes the completed enclosure.

The cover system is not placed until the enclosure is full, and it is possible that the cover system be omitted or that such a cover system be used to cover something other than a properly formed enclosure.

The enclosure can be used for different purposes, such as containment of petroleum products, for instance as a spillage containment bund around an oil storage tank. In general, although the invention is primarily for massive constructions such as landfill enclosures, it could find use for smaller constructions, eg a containment bund of a base size 3m x 3m and depth 3m.

Modern practice is to use plastics materials for the geonets and geotextiles and usually for the geomembranes. However slippage can occur between the layers where the inclination is substantial, although it is highly desirable to have steep-sided enclosures and steep-sided cover systems in order to increase capacity for a given area of land.

Normally, there is only a restricted range of materials which can be used for the lining systems, such as medium or high density polyethylene. Elastomeric materials have been suggested, for instance in US 5 056 960, but they may not prevent slippage long term and are not so chemically resistant as the polyethylenes normally used; also, elastomerics are relatively expensive. Potential new raw materials must be tested in order to meet regulations, and testing may take many years.

In order to prevent slippage, it is known to provide high friction surfaces on waste management pit liners by texturing the face or faces of the liner. However, there are problems relating to the welding of the edges of such materials and the degree of improvement is limited.

## The Invention

The present invention provides lining systems, geocomponents, an enclosure and a cover system. The appropriate contacting surface or surfaces or parts thereof will be gritted and firmly retaining particles of grit.

Using the invention, the coefficient of friction between the layers of the lining system can be greatly increased, enabling the slopes at which the lining system lies to be increased above about 1 in 5 (20%) or 1 in 4 to about 1 in 3 or 1 in 2.5 or greater, thereby greatly increasing the capacity of say a waste containment landfill enclosure. Existing cover systems can be modified, removed or replaced, if needed more waste can be dumped, and new, steeper-sided cover systems can be constructed. The invention is also useful in horizontal parts of the lining systems and at any angle of inclination; it provides resistance to any significant shear forces acting in the plane of the lining system. Thus the invention can be used on the sides and/or base of a said enclosure or on the sides and/or top of a cover system.

At least one face of a geonet will normally be in contact with a geotextile. It is posible to insert a geotextile between a geomembrane and a geonet, for instance with a gritted surface of the geomembrane in contact with the geotextile, but a geomembrane is preferably in contact with a geonet. Pressure, eg of the fill, will cause the grit retained in the surface of one lining component to penetrate into or indent the surface of the contacting lining component, or interlock with grit on the surface of the contacting lining component. It is found that the peak coefficient of friction is only slightly smaller if just one contacting surface is gritted though the residual coefficient of friction is higher if both contacting surfaces are gritted. The peak coefficient of friction is that measured before slippage whilst the residual coefficient of friction is that measured during slippage. The user can choose according to economic criteria whether both contacting lining components are gritted or not. Thus for a said enclosure grit can be applied to the upper face of the base liner, to both faces of each drainage core and to both faces of the main liner, or only to the drainage cores or only to the liners.

By gritting the geogrids, they can be usefully laid against or laid within the lining system and enable the inclination of the slope to be further increased by conferring increased tensile strength to the lining system - thus, for the side walls of the enclosure, the geogrids can be secured to the top margins of the enclosure. In addition, the gritting reduces slippage during construction on steep slopes. The geogrids can be used in one or more layers, in the latter case either spaced apart or in contact with each other.

The grit particles are retained by mechanical keying or anchoring, ie the plastics material engages "undercut" surfaces of the grit. In this way, the friction-increasing characteristics are stable and permanent, and are not affected by normal chemicals present eg in a waste containment landfill enclosure. The grit particles are incorporated in the plastics material as part of a manufacturing process and not because of the random contamination with say sand that may occur on a construction site; the latter would not lead to firm retention of the grit particles or of sufficiently even distribution of particles.

Any suitable grit can be used, provided it is hard and angular and will penetrate into or indent the face of the layer in contact or will interlock with grit on the layer in contact; for instance the grit can be powdered or fractured glass as used in glass-paper, very sharp angular sand as used in sandpaper, or aluminium oxide as used in emery paper. It is preferred that the grit particles should be in a single layer, not as in DE-A-3 921 397 for instance. Any suitable range of sizes can be used, but the preferred maximum particle size is about 1 mm or 0.6 mm though larger particles can be used; it is preferred that the largest particles have a particle size of at least about 0.4 mm.

If the surface of the lining component is heated for incorporation of the grit particles, it can be heated by any suitable non-contact heating such as flame or hot air heating. It is desirable that the :eating should be rapid so that only the surface layer, say not greater than about 0.5 mm, melts or softens. The surface may be heated for instance to a temperature of up to about 250°C in the case of medium or high density polyethylene. Alternatively or also the grit may be heated or warmed, for instance to a temperature of about 360°C.

The grit can be pressed into the surface using a pressing member arranged such that a gap is left between the pressing member and the surface of the geocomponent and the grit particles remain proud of, i.e. project from, the surface. The pressing member can for instance be a roller which coacts for instance with a larger diameter roll around which or to which the geocomponent is fed.

Some of the grit may be only loosely keyed into the substrate surface, and loose grit particles can be brushed off after cooling; however, even after brushing, a small percentage of the grit particles can still fall off the surface due to handling such as flexing or bending. If it is desirable to avoid dislodging any grit during handling, a retaining coating, say having a thickness not greater than 0.1 mm, can be applied, e.g. sprayed on or roller applied, in order to hold the grit in place. The coating can be a very thin flexible varnish or latex; the coating need not impair the frictional properties of the grit, particularly if the grit is under relatively high pressure in use, such as the pressure between the geonet and the geomembrane in a waste containment landfill enclosure.

The grit can be deposited on a surface and the substrate brought down onto the grit, or the grit can be deposited on the substrate. Where a mesh structure is being coated, it is preferable to bring the mesh structure down onto the grit to avoid having to recycle too much grit. It is desirable to have a fixed grit deposit position and a moving lining component. The lining component can be fed to or passed around a large diameter roll, say having a diameter of at least about 500 mm, the grit particles being fed to the surface of the roll.

The geomembranes will generally be wide, say over about three or five metres wide, standard widths being about 5 metres, about 6.86 metres and about 10 metres, and will normally be relatively strong, say over 20 or 40 kN/m width. The geomembranes can be gritted on one or both faces - thus the gritted surface can be in contact with soil (which term includes earth, sand and clay). The geomembranes may be formed for example of medium or high density polyethylene or of coextrusions of low density and medium density or high density polyethylene or of elastomeric materials (which are plastics materials in the context of the present specification). Normal practice is to weld or adhere the edge portion of one geomembrane to the adjacent geomembrane, during installation, with an overlap of about 250mm or more. To facilitate this, the surfaces to which the grit particles have been applied can have at least one edge portion to which the grit particles have not been applied.

For reasons of economy, the grit particles may be applied to the surface of a geomembrane or geonet in zones, leaving an area or areas to which the grit particles have not been applied. For instance, the gritted zones may be longitudinal stripes, for instance about 40 mm or 200 mm wide with uncoated areas of about 40 mm up to about 250 mm wide, but any suitable pattern, for example herringbone, can be used.

Though it is possible to use a gritting procedure in which all the surfaces of the geonet are gritted, it is preferred to grit only the external portions of the set of strands at the respective face.

At least the thicker portions of the geogrids are coated as it is these portions which will be pressed most strongly into contact with the contacting surfaces. The thicker portions may be bars extending transversely to oriented strands.

In general, the lining components may be coated on one or both faces, and any lining component can be coated in zones, for instance stripes.

## Preferred Embodiments

The invention will be further described, by way of example, with reference to the accompanying drawings, in which:

Figure 1 is a schematic vertical section through a waste containment landfill enclosure with cover system, showing details of the lining systems in various zones;

Figure 2 is an isometric projection of a geomembrane in the lining systems;

Figure 3 is an isometric projection of a geonet in the lining systems;

Figure 4 is a transverse section along the line IV-IV in Figure 3, on a larger scale;

Figure 5 is an isometric projection of an alternative geonet;

Figure 6 is an isometric projection of a further alternative geonet;

Figure 7 is an isometric projection of a geogrid in the lining systems;

Figure 8 is a schematic side view of a first machine for gritting lining components in accordance with the invention;

Figure 9 is a second such machine; and

Figure 10 is a third such machine.

## Figure 1

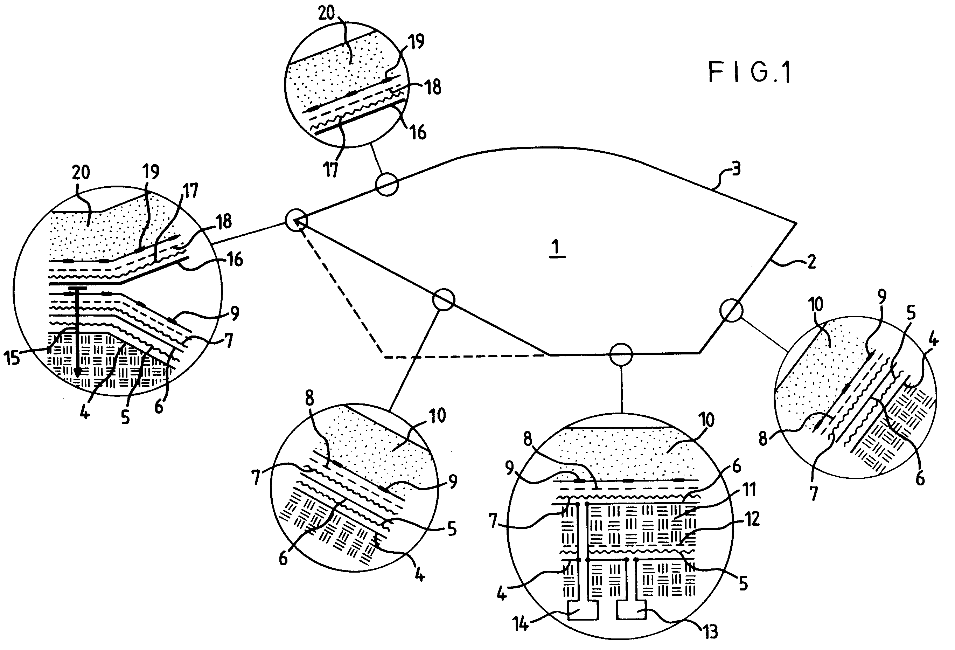

The waste containment landfill enclosure 1 shown in Figure 1 has a side wall and base lining system 2 forming a massive cell, and a massive closure system with a closure lining system 3.

The lining system 2 has a geomembrane base liner 4, a leak detection geonet drainage core 5, a geomembrane main liner 6, a geonet leachate drainage core 7, a geotextile filter 8, a uniaxial geogrid 9 and a layer of soil such as clay 10. On the base, a further layer of soil 11 is placed beneath the main liner 6 with an extra geotextile filter 12 inserted above the leak detection drainage core 5. The leak detection drainage core 5 is shown as being connected to a leak detector sump 13 and the leachate drainage core 7 is shown as being connected to a leachate sump 14. At the top of the side walls, the plastics material components of the lining system are securely fixed to the ground, for instance by means of stakes 15.

The right-hand side of Figure 1 shows that with use of the lining system 2, the side wall slope can be considerably increased. The dashed line on the left-hand side of Figure 1 shows the increased capacity that can be made available by using the invention.

In the closure lining system 3, there is a geomembrane containment liner 16, a geonet drainage core 17, a geotextile filter 18, a uniaxial geogrid 19 and a soil layer 20. The geogrid 19 can be taken right over the top of the closure system 3 in a continuous manner (whether as a single length or multiple lengths joined together), to secure the whole lining system 3.

## Figure 2

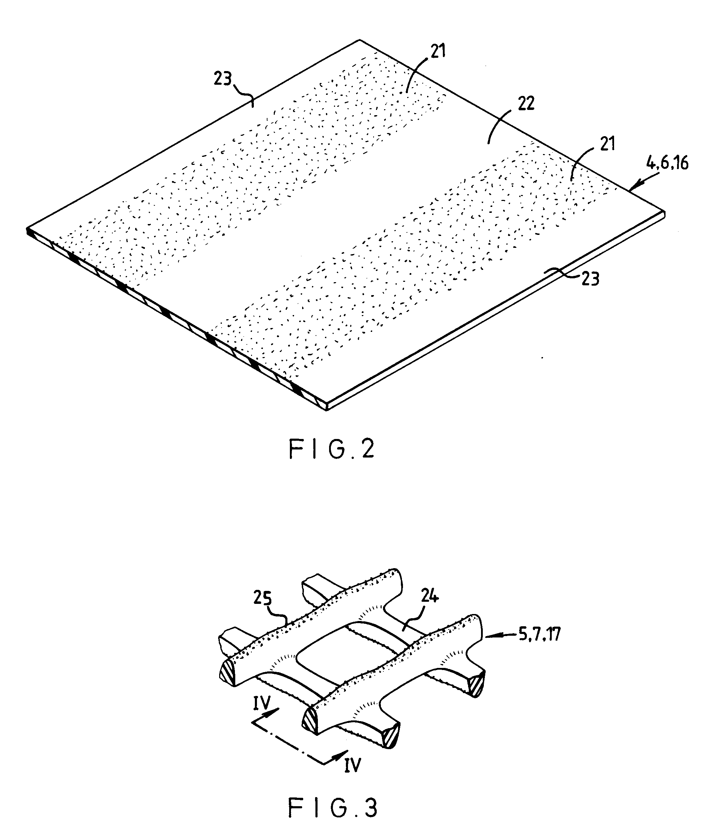

Figure 2 shows a polythylene geomembrane liner 4, 6 or 16. There are stripes 21 which are gritted, leaving an ungritted strip 22 and ungritted edge portions 23. The liner 4, 6 or 16 can be gritted on one or both faces.

The liner 4, 6, 16 was formed by extrusion and was gritted for instance as explained below. The width was about 5 metres, the thickness about 2 mm (an alternative thickness is about 3 mm), and the liner 4, 6 or 16 can be provided in large rolls; its strength is about 48 kN/m width for a 2 mm thickness.

## Figures 3 and 4

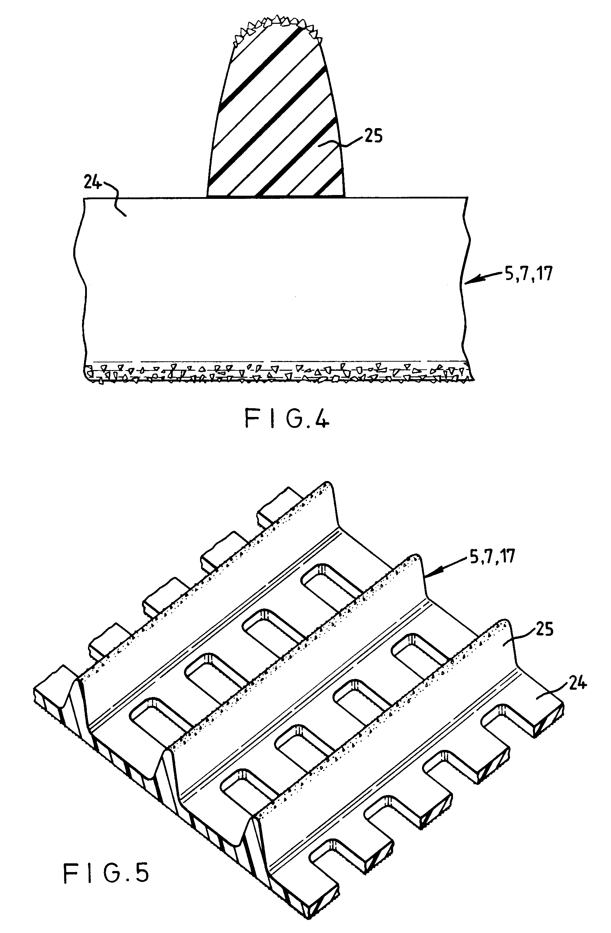

Figures 3 and 4 show a polythylene geonet drainage core 5, 7 or 17. The drainage core is bi-planar, comprising two sets of strands 24, 25 whose axes are in different planes. As shown more clearly in Figure 4, at the respective faces only the external portions of the set of strands 24, 25 are coated with grit, though in other procedures the whole of the surface area of geonet or core is gritted.

The drainage core of Figure 3 is formed by integral extrusion in accordance with US 2 919 467 and is gritted for instance as explained below. The width is about 5 metres, the overall thickness about 5 mm, and the drainage core 5, 7 or 17 can be provided in large rolls.

## Figure 5

Figure 5 illustrates an integrally-extruded polythylene drainage core 5, 7 or 17, but in which on one face the external portions of both sets of strands 24, 25 are coplanar. At the respective faces, only the external portions of the strands 24, 25 are coated with grit.

## Figure 6

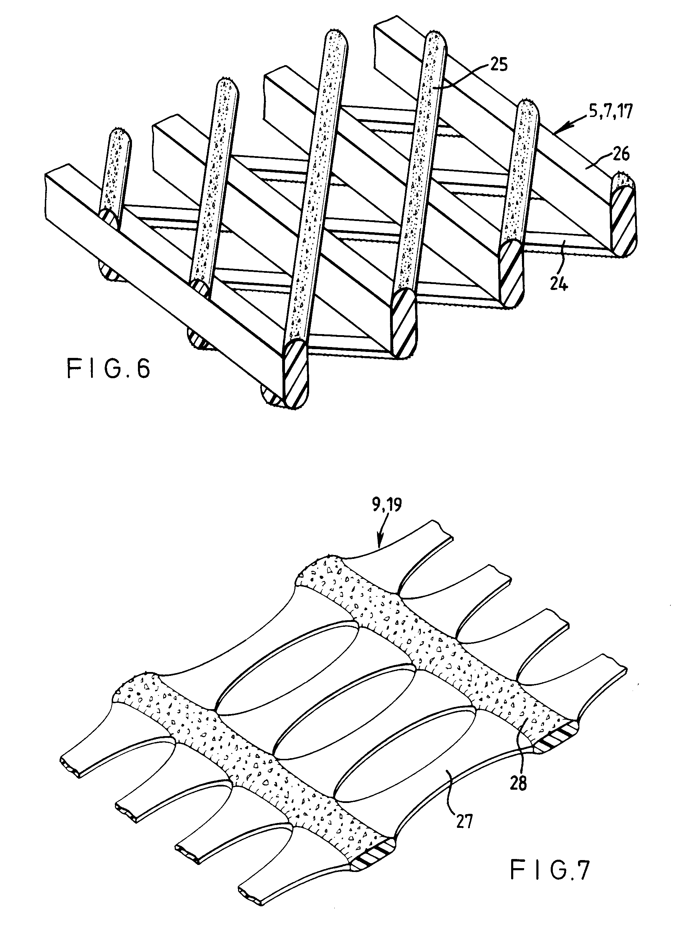

Figure 6 illustrates a tri-planar integrally-extruded polyethylene drainage core 5, 7 or 17, having an intermediate set of strands 26. At the respective faces, only the external portion of the strands 24, 25 are coated with grit.

Figure 7

Figure 7 shows a polythylene geogrid 9 or 19. The geogrid 9 or 19 is shown as having oriented strands 27 and thicker transverse bars 28. The geogrid 9 or 19 will have strong uniaxial strength characteristics, though it may include some biaxial orientation. Normally, geogrids are substantially uniplanar, and are preferably so; however, for purposes of the present invention, the geogrids need not be substantially uniplanar. The bars 28 are shown as gritted whilst the strands 27 are not gritted. The geogrid 9 or 19 can be made as disclosed in US 4 374 798 or EP-A-0 374 365 or EP-A-0 418 104 and is gritted for instance as explained below. The width is about 1 metre, the overall thickness about 4.5 mm, and the geogrid 9 or 19 can be provided in large rolls.

The geotextile is not specifically illustrated, and can be a standard geotextile for instance as supplied by E I Dupont de Nemours.

Figure 8

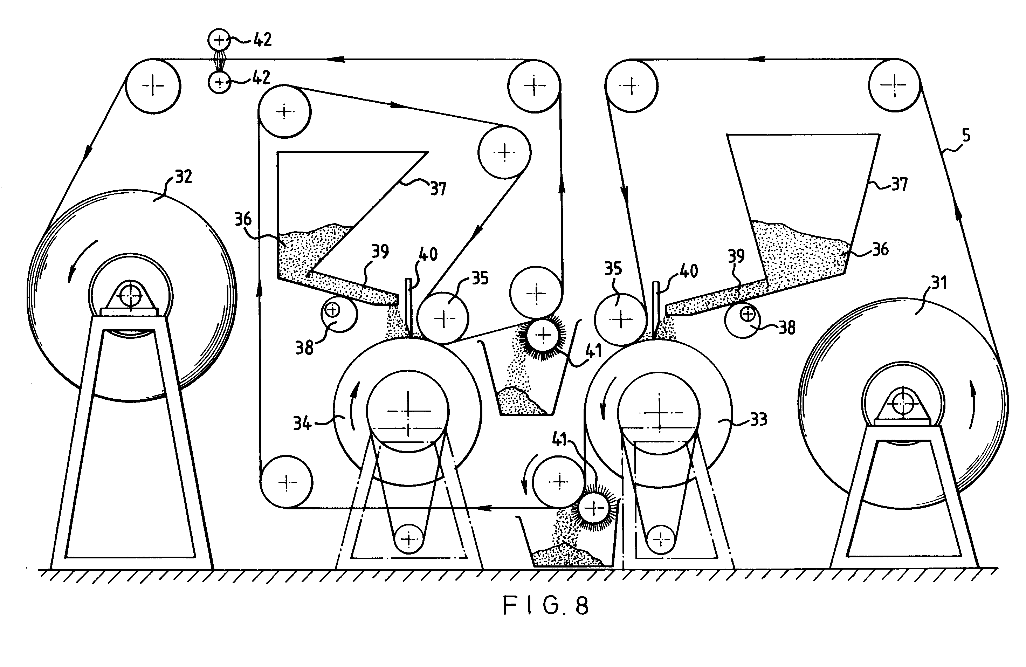

Figure 8 shows a geonet or drainage core 5 (or 7 or 17) being gritted, but the lining component could be a geomembrane or liner 6 (or 4 or 16) or a geogrid 9 (or 19). The geonet 5 passes from a let-off roll 31 to a take-up roll 32, passing around various guide rollers which are not described in detail. Normally, the take-up roll 32 will be driven, and the rolls 33, 34 are also driven. The geonet 5 is just brought up to the roll 34 but passes around a significant arc of the roll 33 to allow the plant to occupy less space. The geonet 5 is held close to, but slightly spaced apart from, the roll 33, 34 by a nip roller 35 so that grit particles 36 are pressed into the surface of the geonet 5, but remain projecting from the surface. The grit particles 36 may be commercial aluminium oxide grit with a particle size ranging from 0.6 mm to dust. There are hoppers 37 for the grit particles 36, with suitable vibrators 38 to cause the grit particles 36 to pass out through outlets 39 which contain heaters for heating the grit particles 36 to a temperature of about 360°C. The grit particles 36 fall onto the surface of the roll 33, 34 and pass under a doctor blade 40 so that they are distributed fairly evenly over the surface of the roll 33, 34. The roll 33, 34 is water cooled, but the grit particles 36 are still at a suitable temperature of about 360°C when they come into contact with the net 5. The grit particles cause local melting of the contacting face of the net 35, and become embedded in the face and securely held in the face by mechanical keying or anchoring, the plastics material of the net 5 closing around "undercut" surfaces of the grit particles 36. The cold roll 33, 34 ensures that the body of the net 5 is not melted. Subsequently, a rotary brush 41 brushes off any loose grit particles 36, for return to the hoppers 37.

Two sprayers 42 can be included for spraying on a thin coating to hold any grit particles which are not properly keyed into position. The sprayers 42 may be followed by suitable dryers (not shown).

The arrangement of Figure 8 is suitable for gritting a geonet 5 as the geonet 5 is brought down onto the gritted moving surface of the roll 33, 34 and the amount of recycled grit particles 36 is kept to a minimum. The lining component is gritted on each face.

Though not shown, the outlets 39 can cover only part of the width of the rolls 33, 34, for applying stripes of grit or leaving marginal portions ungritted.

Figure 9

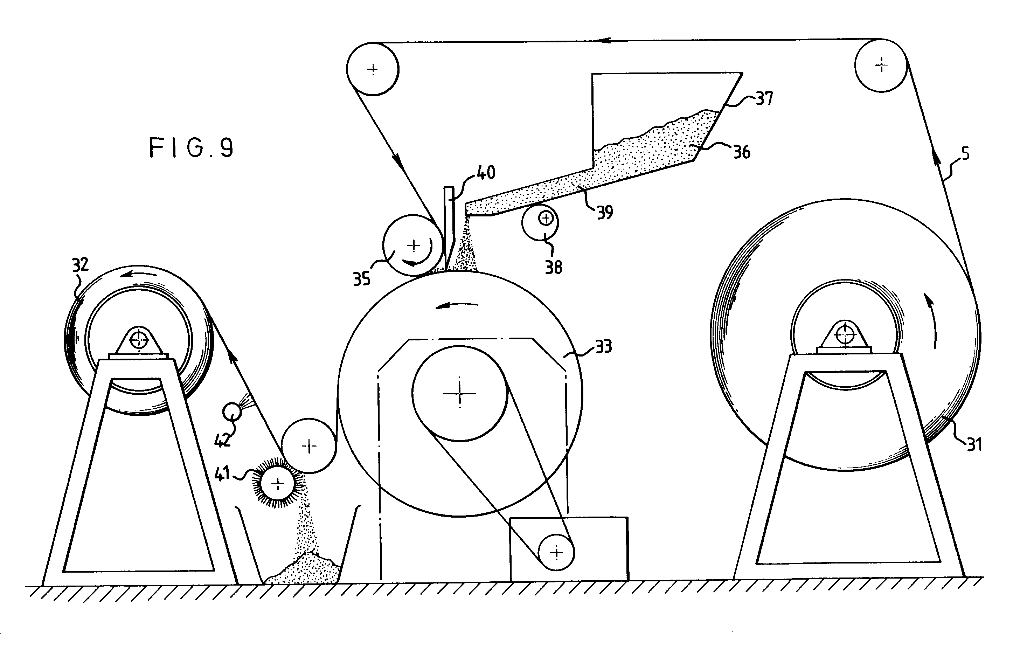

Figure 9 corresponds to the right-hand side of Figure 8, and shows an arrangement for gritting a geonet 5 (or other lining component or geogrid 9 or 19) on one face only.

Figure 10

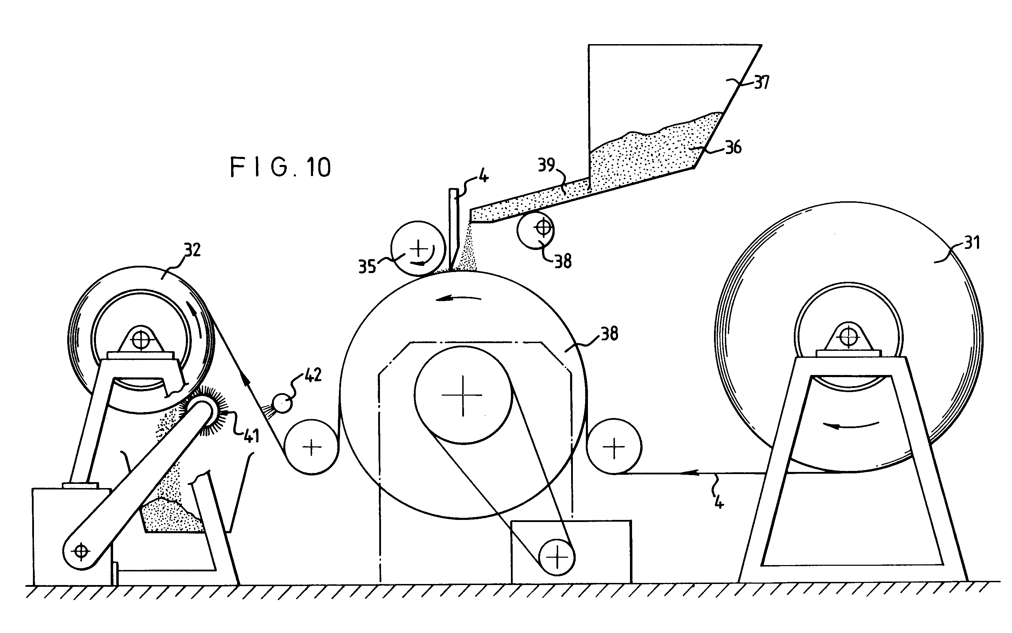

Figure 10 corresponds generally to Figure 9, and the same reference numerals are used for items having a similar function. However, the arrangement is more suitable for gritting a geomembrane 4 (or 6 or 16), the gritting being on one face only. In this case, the geomembrane 4 is passed around about 180° of the roll 33 and the grit particles 36 are spread on the upper surface of the geomembrane 4 rather than on the roll 33.

Testing

Interface shear testing was carried out on a medium density polyethylene geonet laid against a medium density polyethylene geomembrane, the geonet and the geomembrane being as described above. The peak and residual shear stresses were measured at three different normal stresses at about 22, 37 and 52 kN/m$^2$, the angle of friction $\delta$ being calculated (the coefficient of friction is tan $\delta$). The results were as follows:

Untreated geonet and untreated geomembrane
- peak 13°
- residual 13°;
Gritted geonet and untreated geomembrane
- peak 33°
- residual 28°;
Untreated geonet and gritted geomembrane
- peak 34°
- residual 24°;
Gritted geonet and gritted geomembrane
- peak 36°
- residual - 36°.

General

The disclosures of US 2 919 467, US 4 374 798, EP-A-0 374 365 and EP-A-0 418 104 are incorporated herein by reference.

The present invention has been described above by way of example, and modifications can be made within the spirit of the invention. The invention also consists in any individual features described herein or apparent from the drawings, or any combination of such features or any generalisation of such features or combination.

**Claims**

1. A multi-layer lining system for an enclosure formed in or above the ground, or for a cover system for a geoengineering structure, the lining system comprising a geomembrane and/or a geonet formed in plastics material with at least parts of one surface of the geomembrane and/or geonet firmly retaining projecting particles of grit.

2. The lining system of Claim 1, wherein a said geomembrane is in contact with a said geonet, said surface of the geomembrane or geonet being the surface contacting the geonet or geomembrane.

3. The lining system of Claim 1 or 2, wherein a said geonet is in contact with a geotextile, said surface of the geonet being the surface contacting the geotextile.

4. The lining system of any one of the preceding Claims, wherein said surface of the geomembrane is in contact with soil.

5. The lining system of any of the preceding Claims, wherein said surface of the geomembrane is in contact with a geotextile.

6. The lining system of any of the preceding Claims, wherein the grit particles have been engaged in the surface of the plastics material when the surface was soft or melted.

7. The lining system of Claim 6, wherein the grit particles have been engaged in the plastics material by heating the grit particles to above the softening or melting temperature of the plastics material surface and applying the grit particles to the surface so as to cause softening or melting of the surface.

8. The lining system of any of the preceding Claims, wherein a retaining coating has been applied to said surface to hold the grit particles in place.

9. A plastics material geomembrane for a multi-layer lining system of an enclosure formed in or above the ground or of a cover system for a geoengineering structure, at least parts of one surface of the geomembrane firmly retaining particles of grit.

10. A plastics material geonet for a multi-layer lining system of an enclosure formed in or above the ground or of a cover system for a geoengineering structure, the geonet comprising at least two sets of strands at a substantial angle to each other, on at least one face of the geonet at least parts of the external portions of the set of strands at the respective face firmly retaining particles of grit.

11. The geonet of Claim 10, wherein only said external portions firmly retain particles of grit.

12. The geomembrane or geonet of any of Claims 9 to 11, wherein the surface to which the grit particles have been applied has at least one edge portion to which the grit particles have not beeen applied.

13. The geomembrane or geonet of any of Claims 9 to 12, wherein the grit particles have been applied to the surface in zones leaving at least one area to which the grit particles have not been applied.

14. A plastics material geogrid for a multi-layer lining system of an enclosure formed in or above the ground or of a cover system for a geoengineering structure, the geogrid comprising parallel, oriented strands and thicker, less oriented portions, at least parts of one surface of the thicker portions firmly retaining particles of grit.

15. The geogrid of Claim 14, and having substantially greater tensile strength in one direction than in another direction at right angles thereto.

16. The geogrid of Claim 15, wherein said thicker portions are bars extending transversely to the oriented strands.

17. The geomembrane, geonet or geogrid of any of Claims 9 to 16, wherein the grit particles have been engaged in the surface of the plastics material when the surface was soft or melted.

18. The geomembrane, geonet or geogrid of Claim 17, wherein the grit particles have been engaged in the plastics material surface by heating the grit particles to above the softening or melting temperature of the surface and applying the grit particles to the surface so as to cause softening or melting of the surface.

19. The geomembrane, geonet or geogrid of any of Claims 9 to 18, wherein a retaining coating has been applied to said surface to hold the grit particles in place.

20. A lining system, substantially as herein described with reference to, and as shown in, Figure 1, or in Figure 1 and any of Figures 2 to 7, of the accompanying drawings.

21. A geomembrane, geonet or geogrid substantially as herein described with reference to, and as shown in, Figure 2, or Figures 3 and 4, or Figure 5, or Figure 6, or Figure 7 of the accompanying drawings, or as described with reference to Figures 8, 9 or 10 of the accompanying drawings.

22. An enclosure formed in or above the ground, having the lining system of any of Claims 1 to 8 and 20.

23. The enclosure of Claim 22, and having the lining system on the sides of the enclosure, the lining system being at a substantial angle of inclination.

24. A cover system for a geoengineering structure, having the lining system of any of Claims 1 to 8 and 20.

25. The cover system of Claim 24, and having the lining system on the sides of the cover system, the lining system being at a substantial angle of inclination.

F I G.1

F I G . 2

F I G . 3

FIG.4

FIG.5

FIG.6

FIG.7

FIG.8

EP 0 512 752 A1

FIG.9

FIG. 10

**European Patent Office**

## EUROPEAN SEARCH REPORT

Application Number

EP    92 30 3911

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 259 165 (LEUCADIA)<br><br>* page 1, line 27 - line 47 *<br>* page 4, line 5 - line 14; figures 1-10 *<br>--- | 1-6,<br>9-11,17,<br>20-25 | E02D31/00<br>B09B1/00 |
| Y | US-A-3 754 960 (HART)<br><br>* column 1, line 13 - line 26 *<br>* column 1, line 46 - column 2, line 29; figure 1 *<br>--- | 1-6,<br>9-11,17,<br>20-25 | |
| A | FR-A-2 103 718 (LÜTHY)<br>* page 1, line 6 - line 14 *<br>* page 2, line 4 - line 15 *<br>--- | 7,18 | |
| A | WORLD PATENTS INDEX<br>Section Ch, Week 2079,<br>Derwent Publications Ltd., London, GB;<br>Class L, AN 79-38419B[20]<br>& SU-A-614 194 (BELEVICH) 1 June 1978<br>* abstract *<br>--- | 7,18 | |
| A | DE-A-3 022 019 (BERLEBURGER SCHAUMSTOFFE)<br><br>* page 5, line 31 - page 6, line 19 *<br>* page 6, line 27 - line 33 *<br>* page 7, line 15 - line 24; figure 1 *<br>--- | 8,12,13,<br>19 | TECHNICAL FIELDS SEARCHED (Int. Cl.5 )<br><br>E02D<br>B09B<br>D06N<br>E04D<br>B65D |
| A,D | DE-A-3 921 397 (BÖRNER)<br>* column 2, line 2 - line 55; claims 10,18; figure 1 *<br>--- | 8,19 | |
| A,D | US-A-4 374 798 (MERCER)<br>* column 2, line 35 - line 57 *<br>* column 6, line 43 - line 48; figures 1-3 *<br>----- | 14-16 | |

The present search report has been drawn up for all claims

| Place of search | Date of completion of the search | Examiner |
|---|---|---|
| THE HAGUE | 03 AUGUST 1992 | BELLINGACCI F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)